# EUROPÄISCHE PATENTSCHRIFT

(11) **EP 1 952 922 B1**
(45) Veröffentlichungstag und Bekanntmachung des Hinweises auf die Patenterteilung: **06.03.2019**
(21) Anmeldenummer: 08405002.0
(22) Anmeldetag: 04.01.2008
(51) Int. Cl.: B23B 31/107, B23B 31/30, B23Q 1/00, B23Q 3/18

(54) **Spanneinrichtung mit einem Spannfutter und einem lösbar daran fixierbaren Werkstückträger**
Clamping device with a clamping chuck and a detachable workpiece holder which can be affixed thereto
Dispositif de serrage doté d'un mandrin et d'un porte-outil pouvant être fixé sur celui-ci de manière amovible

(30) Priorität: 30.01.2007 CH 1542007
(43) Veröffentlichungstag der Anmeldung: 06.08.2008
(73) Patentinhaber: Erowa AG, 5734 Reinach (CH)
(72) Erfinder: Sandmeier, Bruno, 5707 Seengen (CH)
(74) Vertreter: Hering, Hartmut

(56) Entgegenhaltungen:
- EP-A- 0 189 697
- EP-A- 1 602 426
- EP-A1- 0 827 806
- EP-A1- 1 308 249
- EP-A2- 0 025 995
- WO-A-2006/103041
- DE-A1- 2 947 938
- DE-A1- 4 135 418
- DE-A1- 10 117 485
- DE-A1-102004 006 370
- DE-C- 871 990
- DE-U1- 29 724 680
- GB-A- 1 365 615

## Beschreibung

Die vorliegende Erfindung bezieht sich auf eine gemäss dem Oberbegriff des Anspruchs 1 ausgebildete Spanneinrichtung.

Derartige Spanneinrichtungen werden bevorzugt zum positionsdefinierten Aufspannen von mit einem Werkzeug oder Werkstück versehenen Werkstückträgern eingesetzt. Das Spannfutter wird üblicherweise fest auf einem Arbeitstisch einer Bearbeitungsmaschine oder einer Presse fixiert, während der Werkstückträger wiederholt positionsgenau am Spannfutter fixierbar und auch wieder lösbar ist.

Während bei bekannten Spanneinrichtungen die auftretenden Druckkräfte zumeist grossflächig über dazu vorgesehene Auflageflächen übertragen werden, müssen Zugkräfte im Allgemeinen von einem mit Spannelementen versehenen Spannmechanismus aufgenommen werden. Ein solcher Spannmechanismus verfügt üblicherweise über eine Vielzahl von federbelasteten Spannkugeln, welche beim Festspannen des Werkstückträgers an einer Spannfläche eines am Werkstückträger befestigten Spannzapfens oder direkt am Werkstückträger selber angreifen. Obwohl sich Spanneinrichtungen dieser Art bewährt haben wäre es für bestimmte Anwendungen wünschenswert, wenn der Werkstückträger höhere Zugkräfte aufnehmen könnte. Als Beispiel hierzu seien Anwendungen in Pulverpressen erwähnt, wo an dem Werkstückträger ein Stempel zum Pressen des Pulvers befestigt ist. Sofern nicht nur die Stirnseite des Stempels, sondern insbesondere auch dessen innere und/oder äussere Mantelfläche an dem eigentlichen Formprozess beteiligt ist/sind, so müssen beim Herausziehen des Stempels aus der Matrize entsprechend hohe Auszugskräfte aufgebracht werden, damit der Stempel in axialer Richtung aus der hoch verdichteten Pulvermasse herausgezogen werden kann. So kann es durchaus sein, dass zum Herausziehen des Stempels mehr als 30% der Presskraft in Zugrichtung aufgebracht werden müssen. Wenn also beispielsweise zum Herstellen eines Formteils aus Eisen- oder Keramikpulver eine Presskraft von 100 Tonnen aufgebracht werden muss, so müssen zum Entfernen des Stempels 30 Tonnen oder mehr in Zugrichtung aufgebracht werden. Sofern der Stempel an einem Werkstückträger befestigt ist, müssen diese Kräfte natürlich auch vom Werkstückträger auf das Spannfutter übertragen werden können. Es versteht sich, dass derart hohe Auszugskräfte nicht von einem herkömmlichen Kugelspannmechanismus aufgenommen werden können, da durch die sehr kleine Auflagefläche der Kugeln die Flächenpressung viel zu hoch wäre.

Aus der EP-A-0 255 042 ist eine Spannvorrichtung für ein Werkzeug für eine Werkzeugmaschine bekannt, die aus einem Spannfutter und einem Werkzeughalter besteht. Das Spannfutter weist zwei aus seiner Unterseite vorstehende Zentrierleistenpaare auf, die mit Anlageflächen zur Ausrichtung des Werkstückträgers in X- und Y-Richtung versehen sind. Ferner sind vier über die Oberfläche des Spannfutters vorstehende Zapfen vorgesehen, die für die Ausrichtung des Werkstückträgers in Z-Richtung verantwortlich sind. Der Werkzeughalter weist eine plane Oberfläche auf, die gegen die Stirnfläche der vorerwähnten Zapfen aufzuliegen bestimmt ist. Ferner sind im Werkzeughalter zwei Paare von auf die Zentrierleisten ausgerichtete Nuten mit zur Anlage an die Leisten vorgesehenen elastischen Lippen vorhanden. Schliesslich ist der Werkzeughalter mit einer Mittelbohrung zur Aufnahme eines Zugbolzens versehen, mit Hilfe dessen die zur lagegerechten Zentrierung des Werkstückträgers erforderliche Spannkraft übertragen wird. Dabei weist das Spannfutter einen zentrisch angeordneten Kugelverschluss auf, der mit diesem Zugbolzen zusammenarbeitet. Es versteht sich, dass über den Zugbolzen und den Kugelverschluss nur vergleichsweise geringe Kräfte in Zugrichtung übertragen werden können.

In der EP-A-0 827 806 ist ein Spannzylinder zum Spannen eines Einzugsnippels beschrieben. Der Spannzylinder ist mit einer zentralen Ausnehmung versehen, welche der Aufnahme des Einzugsnippels dient. Der Spannzylinder ist mit einem ersten äusseren Kolben sowie einem radial innerhalb davon angeordneten zweiten Kolben versehen. Zwischen den beiden genannten Kolben ist eine Mehrzahl von Spannelementen, Verriegelungskolben genannt, angeordnet, welche dem Festspannen des Einzugsnippels dienen. Diese Verriegelungskolben greifen an einem am vorderen Ende des Einzugsnippels angeordneten Absatz an. Mehrere Verriegelungskolben sind gleichmässig über den Umfang verteilt angeordnet. Die beiden Kolben sind zusammen mit den Verriegelungskolben axial verschiebbar, wobei die Verriegelungskolben zusätzlich noch radial verstellbar sind. Der äussere Kolben ist mit einer Schrägfläche versehen und mittels Druckfedern in axialer Richtung derart belastet, dass er die Verriegelungskolben durch die Schrägfläche radial nach innen zu drücken bestimmt ist. Die Verriegelungskolben sind als Schieberelemente ausgebildet. Das Lösen der Kolben erfolgt hydraulisch. Ein wesentlicher Nachteil der diesem Spannzylinder anhaftet besteht darin, dass eine mit dem Einzugsnippel verbundene Palette in Auszugsrichtung federelastisch nachgiebig ist und nur vergleichsweise geringe Kräfte aufnehmen kann, da die Verriegelungskolben nur mit einer vergleichsweise kleinen Auflagefläche an dem Einzugsnippel zur Anlage kommen und der den Einzugsnippel über die Verriegelungskolben in Z-Richtung fixierende Kolben in Auszugsrichtung nur durch die Druckfedern belastet ist.

Im weiteren ist aus der EP-A-1 068 919 eine Spanneinrichtung bekannt, die vergleichsweise hohe Kipp- und Drehmomente aufnehmen kann. Die Spanneinrichtung umfasst ein im Arbeitsbereich der Bearbeitungsmaschine zu fixierendes Spannfutter und einen auf das Spannfutter aufsetzbaren und daran festspannbaren Werkstückträger. Erste Positioniermittel am Spannfutter und zweite Positioniermittel am Werkstückträger arbeiten als Richtelemente paarweise zusammen und positionieren den Werkstückträger in X-,Y- und Z-Richtung. Um den Werkstückträger in der durch die Positioniermittel festgelegten Position am Spannfutter festzuspannen, ist ebenfalls eine Spannvorrichtung vorgesehen. Diese umfasst eine Mehrzahl von entlang eines Kreisringes angeordneten Spannkugeln, deren Spannkraft-Wirkungslinien im wesentlichen auf oder im Bereich einer gedachten, Z-Achsen-parallelen, die ersten und zweiten Positioniermittel schneidenden Zylindermantelfläche liegen. In Druckrichtung erfolgt die Kraftübertragung vom Werkstückträger auf das Spannfutter primär über Z-Auflageflächen, an welchen der Werkstückträger beim Festspannen am Spannfutter aufzuliegen kommt. Obwohl eine derartige Spanneinrichtung einerseits vergleichsweise hohe Kräfte in Druckrichtung aufnehmen kann und andererseits auch hohe Drehmomente wie auch Kippmomente übertragen kann, ist die Kraftübertragung in Zugrichtung aus den eingangs genannten Gründen beschränkt.

Die DE 871 990 C offenbart ein Schnellwechselfutter mit einer konischen Innenaufnahme, das zur Aufnahme eines mit einem konischen Schaft versehenen Fräswerkzeugs ausgebildet ist. Auf dem Futter sitzt eine Mutter, in welcher Haltestifte aufgenommen sind. Die Haltestifte werden durch Federn nach aussen gedrückt, wobei sie mit ihrem Kopfteil an einem Steuerring anliegen. Durch axiale Verschiebung des Steuerrings 3 werden die Haltestifte entgegen der Federkraft nach innen gedrückt, so dass sie in eine an dem Schaft des Werkzeugs (Fräser) angeordnete Nut eingreifen und dieses Festsetzen. Das eigentliche Festspannen des des Fräswerkzeugs in dem Futter erfolgt durch Anziehen der Mutter. Alternativ kann anstelle eines Werkzeugs (Fräser) auch eine Reduzierhülse festgespannt werden finden.

Aus der EP 1 602 426 A1 geht eine Spanneinrichtung mit einem Spannfutter zum Festspannen einer Spannzange hervor. Die Spannzange ist auf der Rückseite mit einer umlaufenden Schulter versehen, an weicher Spannkugeln des Spannfutters angreifen können, um die Spannzange festzuspannen. In die Unterseite der Schulter sind vier Zentriernuten eingelassen, welche mit am Spannfutter angeordneten Zentrierzapfen derart korrespondieren, dass die Spannzange beim Festspannen am Spannfutter in X- und Y-Richtung wie auch bezüglich der Winkellage um die Z-Achse positioniert wird.

Schliesslich offenbart die DE 29 47 938 A1 eine Spanneinrichtung mit den Merkmalen des Oberbegriffs des unabhängigen Anspruchs 1.

Die Erfindung zielt darauf ab, eine Spanneinrichtung mit einem Spannfutter und einem lösbar daran fixierbaren Werkstückträger derart weiterzubilden, dass der Werkstückträger auch in Zugrichtung hohe Kräfte aufnehmen kann.

Hierzu wird nach der Erfindung eine Spanneinrichtung gemäss dem Anspruch 1 bereitgestellt.

Der grundlegende Erfindungsgedanke ist darin zu sehen, dass das Spannfutter mit schieberartigen Spannelementen versehen ist, welche auf der Aussenseite des Werkstückträgers, namentlich an einer im Wesentlichen entlang der Mantelfläche verlaufenden Spannfläche, grossflächig angreifen. Dadurch wird die grundsätzliche Voraussetzung geschaffen, dass der Werkstückträger auch in Zugrichtung hohe Kräfte aufnehmen und auf das Spannfutter übertragen kann, da eine entlang der Mantelfläche des Werkstückträgers verlaufenden Spannfläche im Vergleich mit einem Spannzapfen eine wesentlich grössere Anlagefläche für die Spannelemente bietet.

Bevorzugte Ausführungsformen und Weiterbildungen des Erfindungsgegenstandes sind in den abhängigen Ansprüchen 2 bis 13 umschrieben.

Um sicherzustellen, dass der Werkstückträger beim Festspannen am Spannfutter mit einer hohen absoluten wie auch repetierbaren Genauigkeit positioniert wird, sind am Spannfutter erste Zentrierelemente angeordnet, welche mit am Werkstückträger angeordneten weiteren Zentrierelementen derart zusammenwirken, dass der Werkstückträger beim Festspannen gegenüber dem Spannfutter in X- und Y-Richtung positioniert wird.

Im folgenden wird ein bevorzugtes Ausführungsbeispiel der erfindungsgemässen Spanneinrichtung unter Bezugnahme auf die beiliegenden Zeichnungen näher erläutert. In den Zeichnungen zeigt:
- Fig. 1: eine perspektivische Ansicht der aus einem Spannfutter und einem Werkstückträger bestehenden Spanneinrichtung;
- Fig. 2a: eine Ansicht von oben auf das Spannfutter;
- Fig. 2b: den perspektivisch dargestellten Werkstückträger in einer Ansicht von unten;
- Fig. 3: einen Horizontalschnitt durch die Spanneinrichtung;
- Fig. 4: einen Vertikalschnitt durch die Spanneinrichtung im verriegelten Zustand;
- Fig. 5: einen Vertikalschnitt durch die Spanneinrichtung im gelösten Zustand;
- Fig. 6: einen Einsatz des Spannfutters zusammen mit einem Schieberelement in perspektivischer Darstellung, und
- Fig. 7: einen Vertikalschnitt durch ein alternatives Ausführungsbeispiel der Spanneinrichtung in vergrösserter Darstellung.

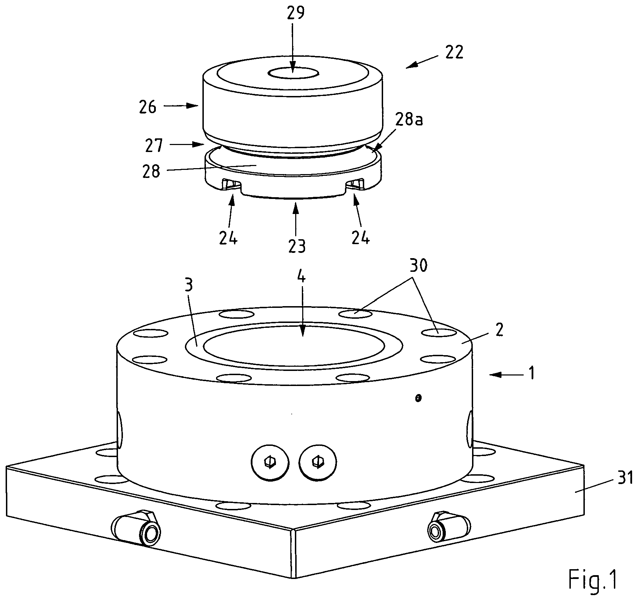

In der Fig. 1 ist die aus einem Spannfutter 1 sowie einem Werkstückträger 22 bestehende Spanneinrichtung perspektivisch dargestellt. Das Spannfutter 1 ist auf einer Basisplatte 31 befestigt, wobei das Spannfutter 1 auch direkt auf dem Maschinentisch befestigt werden kann. Der Werkstückträger 22, auch Palette genannt, dient der Aufnahme von Werkstücken und soll positionsgenau und wiederholbar an dem Spannfutter 1 festgelegt bzw. fixiert werden können. Im vorliegenden Fall ist die Bezeichnung Werkstückträger keinesfalls dahingehend zu interpretieren, dass dieser nur der Aufnahme von Werkstücken dient, sondern es können ebenso Werkzeuge und dergleichen daran befestigt werden.

Das Spannfutter 1 weist einen zylindrischen Grundkörper 2 auf, der auf der Innenseite mit einem Einsatz 3 versehen ist. Dieser Einsatz 3 begrenzt eine runde Öffnung 4, welche der Aufnahme des im wesentlichen zylindrisch ausgebildeten Werkstückträgers 22 dient. Der Werkstückträger 22 ist auf seiner planen Unterseite 23 mit Zentriernuten 24 versehen, in welche am Spannfutter 1 angeordnete Zentriernocken einzugreifen bestimmt sind, wenn der Werkstückträger 22 am Spannfutter 1 fixiert wird. Durch die spielfrei in die Zentriernuten 24 eingreifenden Zentriernocken wird der Werkstückträger 22 beim Festlegen am Spannfutter 1 in X- und Y-Richtung sowie bezüglich der Winkellage um die Z-Achse präzise positioniert. Der Werkstückträger 22 ist im Wesentlichen zylindrisch ausgebildet und mit einer in die Mantelfläche 26 eingelassene Ringnut 27 versehen. Als Mantelfläche 26 wird die äussere Umfangsfläche des Werkstückträgers 22 bezeichnet. Die eine Seitenwand dieser Ringnut 27 bildet eine ringförmige Schulter 28 und dient als Spannfläche 28a, an der am Spannfutter 1 angeordnete Spannelemente beim Festspannen angreifen, wie nachfolgend noch erläutert wird. Die Spannfläche 28a steigt vorzugsweise schräg oder gekrümmt von aussen nach innen an. Der Werkstückträger 22 ist mit einer Durchgangsbohrung 29 versehen, welche beispielsweise der Aufnahme und dem Fixieren eines Werkstücks oder eines Werkzeugs dient. Der Grundkörper 2 ist mit einer Vielzahl von Schrauben 30 fest mit der Basisplatte 31 verbunden. Die zum Fixieren eines Werkstücks oder Werkzeugs notwendigen Befestigungselemente des Werkstückträgers 22 sind nicht näher dargestellt.

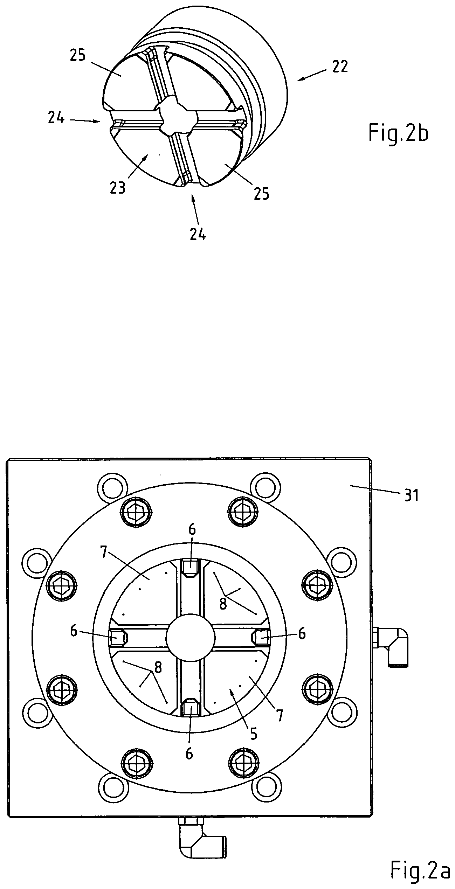

Die Fig. 2a zeigt das Spannfutter 1 in einer Draufsicht. Aus dieser Darstellung ist eine am Boden des Spannfutters 1 angeordnete Grundplatte 5 ersichtlich, welche mit vier dem Positionieren des Werkstückträgers 22 dienenden Zentriernocken 6 versehen ist. Zwischen zwei benachbarten Zentriernocken 6 erstreckt sich jeweils eine kreissektorförmige Abstützfläche 7. Diese kreissektorförmigen Abstützflächen 7 bilden zusammen einen Z-Anschlag für den Werkstückträger 22. Zu Reinigungszwecken ist jede dieser Abstützflächen 7 mit mehreren Bohrungen 8 versehen, über welche Luft derart ausgeblasen werden kann, dass die Unterseite des Werkstückträgers 22 beim Fixieren am Spannfutter von Verunreinigungen befreit werden kann.

Aus der Fig. 2b, welche den Werkstückträger 22 perspektivisch in einer Ansicht von unten zeigt, sind insbesondere vier kreuzförmig in die Unterseite 23 eingelassene Nuten 24 ersichtlich, welche die plane Unterseite 23 in vier plane Auflageflächen 25 unterteilen. Diese Nuten 24 korrespondieren in der Form und Grösse derart mit den vier Zentriernocken 6 des Spannfutters 1, dass der Werkstückträger 22 beim Festspannen am Spannfutter 1 in X- und Y-Richtung sowie bezüglich der Winkellage um die Z-Achse ausgerichtet wird.

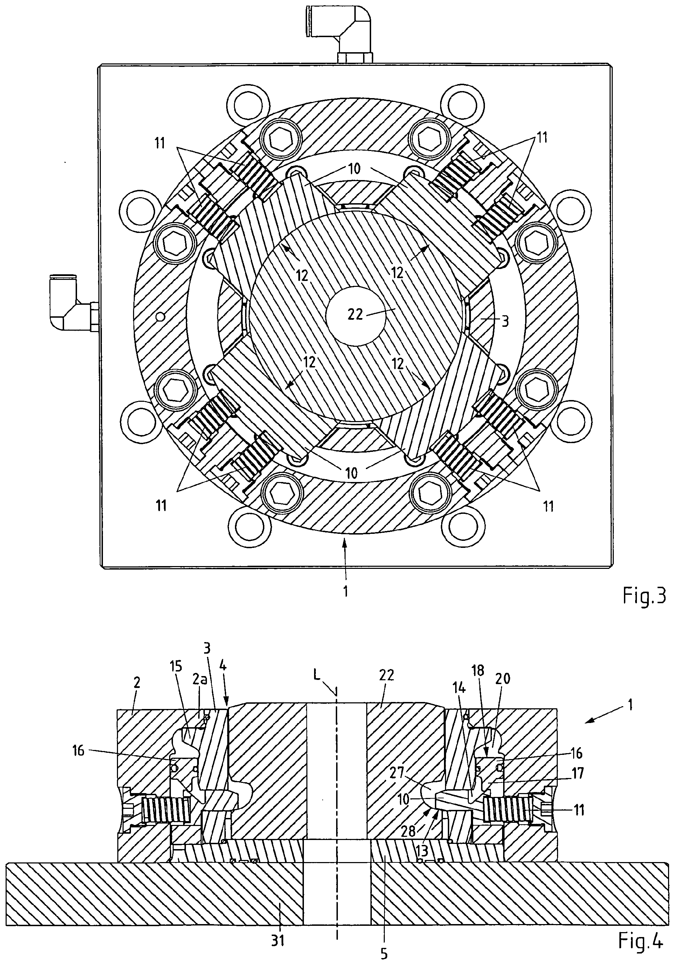

Die Fig. 3 zeigt das Spannfutter 1 zusammen mit dem darin fixierten Werkstückträger 22 in einem Horizontalschnitt. Aus dieser Darstellung sind insbesondere vier Schieberelemente 10 ersichtlich, welche dem Festspannen des Werkstückträgers 22 am Spannfutter 1 dienen. Die vier Schieberelemente 10 sind radial beweglich in dem Einsatz 3 aufgenommen und jeweils um 90° zueinander versetzt angeordnet. Jedes dieser vier Schieberelemente 10 ist mittels zwei Druckfedern 11 derart belastet, dass es radial nach innen in Richtung des im Spannfutter 1 aufgenommenen Werkstückträgers 22 gedrückt wird. Die Längsachse dieser Druckfedern 11 verläuft parallel zur Schiebrichtung der Schieberelemente 10. Der massive Einsatz 3 ist derart ausgebildet, dass er die in Zugrichtung auf die Schieberelemente 10 einwirkende Kräfte aufnehmen kann.

Die Vorderseite 12 der Schieberelemente 10 ist derart und an die Kontur der Spannfläche 28a des Werkstückträgers 22 angepasst, dass das jeweilige Schieberelement 10 grossflächig an der eine Spannfläche 28a bildenden Schulter 28 (Fig. 1) des Werkstückträgers 22 zur Anlage kommt. Vorzugsweise kommt das jeweilige Schieberelement 10 mit seiner gesamten Stirnseite an der Spannfläche 28a zur Anlage. Die dem Werkstückträger 22 zuzuwendenden Vorderseiten 12 der vier Schieberelemente 10 erstrecken sich zusammen über etwa 320° des Umfangs des Werkstückträgers 22. Dadurch wird im Vergleich zu herkömmlichen Kugelspannmechanismen, bei welchen die Kugeln nur punktweise aufliegen, eine vergleichsweise grosse Auflagefläche zwischen den Spannelementen -Schieberelemente 10- und dem Werkstückträger 22 erzielt. Diese grosse Auflagefläche zwischen dem Spannfutter 1 und dem Werkstückträger 22 bildet eine Grundvoraussetzung, damit der Werkstückträger 22 hohe Kräfte in Zugrichtung aufnehmen kann. Jedenfalls ist durch die grossflächige Anlage der Schieberelemente 10 an der Spannfläche 28a die Flächenpressung vergleichsweise gering, auch wenn ggf. sehr hohe Auszugskräfte wirken sollten.

Die Fig. 4 zeigt einen Vertikalschnitt durch die Spanneinrichtung im verriegelten Zustand. Aus dieser Darstellung ist ersichtlich, dass das jeweilige Schieberelement 10 unter der Wirkung der Druckfedern 11 in Richtung des im Spannfutter 1 aufgenommenen Werkstückträgers 22 gedrückt wird. Durch die Vorspannkraft der Federn 11 legt sich das Schieberelement 10 mit seiner als Druckfläche 13 wirkenden Unterseite flächig an der eine Spannfläche bildenden Schulter 28 der Ringnut 27 an und zieht den Werkstückträger 22 nach unten gegen die Grundplatte 5 des Spannfutters 1, bis dieser mit seiner planen Unterseite an den Abstützflächen des Spannfutters 1 zur Anlage kommt und damit in Z-Richtung positioniert ist. Jedenfalls ist der Verlauf bzw. die Neigung der Spannfläche 28a derart an die Vorderseite der Schieberelemente 10 angepasst, dass der Werkstückträger 22 beim radialen Hineinschieben der Schieberelemente 10 in Z-Richtung nach unten gegen die Grundplatte 5 des Spannfutters 1 gezogen wird.

Neben der Positionierung des Werkstückträgers in Z-Richtung wird dieser beim Festspannen am Spannfutter 1 auch in X- und Y-Richtung sowie bezüglich der Winkellage um die Z-Achse positioniert. Diese Positionierung wird, wie bereits vorgängig erwähnt, durch die in die Zentriernuten 24 des Werkstückträgers 22 (Fig. 2a, 2b) eindringenden Zentriernocken 6 des Spannfutters 1 bewirkt.

Um den im Spannfutter 1 eingespannten Werkstückträger 22 zu lösen, müssen die Schieberelemente 10 entgegen der Kraft der Druckfedern 11 radial nach aussen gedrückt werden. Dazu ist ein Betätigungselement in der Form eines ringförmigen Kolbens 16 vorgesehen, der einen mit einer schrägen Druckfläche versehenen Fortsatz 17 aufweist, der in eine entsprechende Ausnehmung 14 im jeweiligen Schieberelement 10 einzugreifen bestimmt ist. Die im Wesentlichen plan ausgebildete Oberseite 18 des ringförmigen Kolbens 16 bildet gleichzeitig den unteren Abschluss einer ringförmigen Druckkammer 20. Wenn der ringförmige Kolben 16 nach unten bewegt wird, drückt dessen in die Ausnehmung 14 des Schieberelements 10 eindringender Fortsatz 17 das Schieberelement 10 radial nach aussen. Die Betätigung des Kolbens 16 erfolgt vorzugsweise pneumatisch, indem die oberhalb des Kolbens 16 verlaufende Druckkammer 20 mit Druckluft beaufschlagt wird. Dieser Anstelle einer pneumatischen Betätigung des Kolbens 16 ist beispielsweise auch eine hydraulische oder elektromechanische Betätigung möglich. Jedenfalls werden die Schieberelemente 10 beim Herunterfahren des Kolbens 16 quer zur Längsachse L des Spannfutters 1 bzw. der zentralen Öffnung 4 verschoben.

Im weiteren ist in der Fig. 4 erkennbar, dass der Grundkörper 2, im Querschnitt gesehen, im Wesentlichen L-förmig ausgebildet ist, indem er auf seiner Oberseite einen sich im Wesentlichen in radialer Richtung erstreckenden Basisteil 2a aufweist. Der Einsatz 3 ist mit einer umlaufenden Schulter 15 versehen, mit der er sich in Zugrichtung flächig an der Unterseite des Basisteils 2a des Grundkörpers 2 abstützt. Diese Ausbildung zusammen mit der massiven Konstruktion des Grundkörpers 2 wie auch des Einsatzes 3 ermöglicht, dass in Zugrichtung hohe Kräfte vom Einsatz 3 aufgenommen und auf den Grundkörper 2 übertragen werden können.

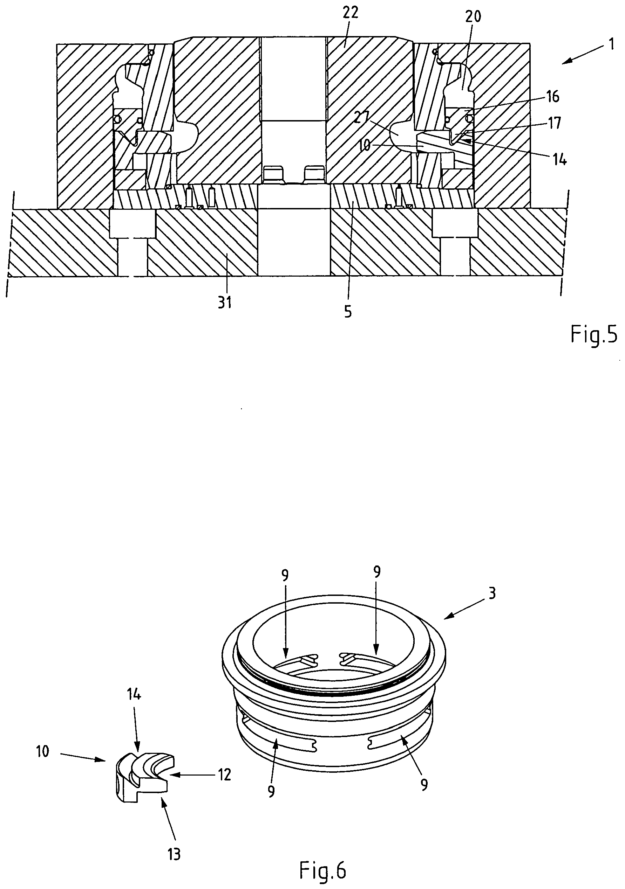

Fig. 5 zeigt einen Vertikalschnitt durch die Spanneinrichtung im gelösten Zustand, wobei aus dieser Darstellung die Druckfedern nicht ersichtlich sind. Um den Werkstückträger 22 aus der Verriegelung zu lösen, müssen die Schieberelemente 10 radial nach aussen bewegt werden. Dazu wird die Druckkammer 20 mit Druckluft beaufschlagt und soweit unter Überdruck gesetzt, dass der Ringkolben 16 nach unten gedrückt wird. Beim Herunterfahren des Ringkolbens 16 dringt dessen Fortsatz 17 in die Ausnehmung 14 des Schieberelements 10 ein und drückt dabei das jeweilige Schieberelement 10 radial soweit nach aussen, bis dessen Rückseite an der Innenseite des Grundkörpers 2 zur Anlage kommt. Nun kann der Werkstückträger 22 aus dem Spannfutter entfernt werden. Zudem ist erkennbar, dass die die Spannfläche bildende Schulter der Ringnut 27 in radialer Richtung von aussen nach innen ansteigt.

Die Fig. 6 zeigt den Einsatz 3 des Spannfutters 1 zusammen mit einem Schieberelement 10 in perspektivischer Darstellung. Aus dieser Darstellung sind insbesondere die vier in den Einsatz 3 eingelassenen, schlitzförmigen Ausnehmungen 9 ersichtlich. Jede dieser Ausnehmungen 9 dient der Aufnahme und Führung eines Schieberelements 10. Vorzugsweise ist die Höhe der jeweiligen Ausnehmung 9 sehr genau auf die Höhe eines Schieberelements 10 abgestimmt, so dass dieses in Z-Richtung praktisch spielfrei in der Ausnehmung aufgenommen ist und eine wiederholbar genaue Positionierung des Werkstückträgers 22 in Z-Richtung ermöglicht wird. Vorzugsweise ist der jeweilige Schlitz 9 zwischen 1 und 5 Mikrometer höher als der darin aufzunehmende Vorderteil 12 des jeweiligen Schieberelements 10. Jedenfalls stützen sich die Schieberelemente 10 in Z-Richtung flächig an dem Einsatz 3 ab.

Ausserdem kann durch die genaue Abstimmung der schlitzförmigen Ausnehmungen 9 auf die Schieberelemente 10 das Eindringen von Schmutz weitgehend verhindert werden. Bei dem dargestellten Schieberelement 10 sind zudem die abgerundete Vorderseite 12, die untere Druckfläche 13 sowie die runde Ausnehmung 14 erkennbar.

Die Vorteile der gezeigten und beschriebenen Spannvorrichtung bestehen insbesondere darin, dass durch die massive Ausbildung des Spannfutters und durch die flächige Auflage der Schieberelemente an dem Werkstückträger in Zugrichtung sehr hohe Kräfte von dem Werkstückträger bzw. der gesamten Spannvorrichtung aufgenommen werden können.

Erfindungsgemäss ausgebildete Spanneinerichtungen eignen sich insbesondere, aber nicht ausschliesslich, für Anwendungen in Pulverpressen, wo an dem Werkstückträger der Stempel zum Pressen des Pulvers befestigt ist. Jedenfalls kann der Werkstückträger hohe Zug- bzw- Auszugskräfte aufnehmen, welche beim Herausziehen des Stempels aus der Matrize ggf. aufgebracht werden müssen.

Derartige Spanneinrichtung eignen sich aber auch zum Einsatz in sogenannten Mehrebenensystemen, bei denen einerseits mehrere Spannfutter koaxial übereinander und andererseits mehrere Werkzeuge wie beispielsweise hohlzylindrische Stempel koaxial zueinander angeordnet werden.

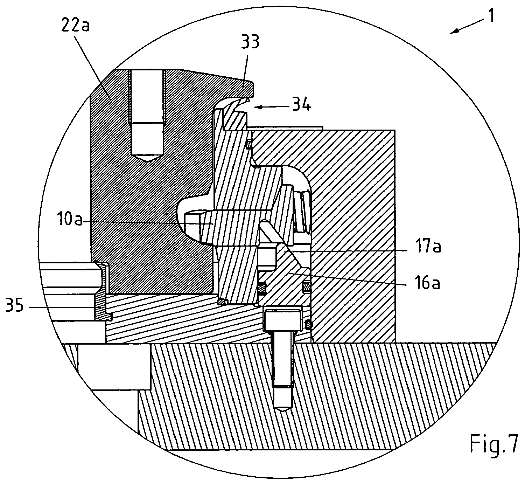

Die Fig. 7 zeigt in vergrösserter Darstellung einen Vertikalschnitt durch ein alternatives Ausführungsbeispiel der Spanneinrichtung, wobei nur ein Ausschnitt der Spanneinrichtung ersichtlich ist. In diesem Beispiel ist der zum Lösen der Schieberelemente 10a vorgesehene Ringkolben 16a unterhalb der Schieberelemente 10a angeordnet, wobei der dem Verschieben der Schieberelemente 10a dienende Fortsatz 17a auf der Oberseite angeordnet, aber wiederum dem jeweiligen Schieberelement 10a zugeordnet ist. Der Werkstückträger 22a ist auf der Oberseite mit einem umlaufenden Kragen 33 versehen, der die zylindrische Mantelfläche des Werkstückträgers 22a in radialer Richtung überrragt. Auf der Oberseite des Spannfutters 1a ist eine Dichtung 34 angeordnet, welche beim Festspannen des Werkstückträgers 22a an der Unterseite des Kragens 33 zur Anlage kommt. Im Bereich des Bodens des Werkstückträgers 22a ist eine weitere Dichtung 35 angeordnet, welche auf der Unterseite des Werkstückträgers 22a zur Anlage kommt. Diese beiden Dichtungen 34, 35 dienen dem Abdichten des Spannfutters 1a und machen es relativ unempfindlich in Bezug auf Verschmutzung. Durch die genannten Dichtungen 34, 35 werden insbesondere die empfindlichen Elemente des Spannfutters 1a wie Schieberelemente 10a, Kolben 16a etc. vor Verschmutzung geschützt.

**Bezugszeichenliste :**

| | | |
|---|---|---|
| 1. | Spannfutter | 36. |
| 2. | Grundkörper / 2a Basisteil | 37. |
| 3. | Einsatz | 38. |
| 4. | zentrale Öffnung | 39. |
| 5. | Grundplatte | 40. |
| 6. | Zentriernocken | 41. |
| 7. | Abstützfläche | 42. |
| 8. | Bohrungen | 43. |
| 9. | schlitzförmige Ausnehmung | 44. |
| 10. | Schieberelement | 45. |
| 11. | Federn | 46. |
| 12. | abgerundete Vorderseite | 47. |
| 13. | Druckfläche | 48. |
| 14. | ringförmige Ausnehmung | 49. |
| 15. | Schulter (Einsatz) | 50. |
| 16. | Ringkolben | 51. |
| 17. | Unterseite | 52. |
| 18. | Oberseite | 53. |
| 19. | | 54. |
| 20. | Druckkammer | 55. |
| 21. | | 56. |
| 22. | Werkstückträger | 57. |
| 23. | plane Unterseite | 58. |
| 24. | Zentriernuten | 59. |
| 25. | Auflageflächen | 60. |
| 26. | Mantelfläche | 61. |
| 27. | umlaufende Ringnut | 62. |
| 28. | Schulter / 28a Spannfläche | 63. |
| 29. | Durchgangsbohrung | 64. |
| 30. | Schrauben | 65. |
| 31. | Basisplatte | 66. |
| 32. | | 67. |
| 33. | Kragen | 68. |
| 34. | Dichtung | 69. |
| 35. | Dichtung | 70. |

## Patentansprüche

1. Spanneinrichtung mit einem Spannfutter (1) und einem lösbar daran fixierbaren Werkstückträger (22), wobei das Spannfutter (1) mit einem Spannmechanismus zum Fixieren des Werkstückträgers (22) versehen ist und der Spannmechanismus eine Vielzahl von Spannelementen aufweist, welche zur Anlage an einer entlang der äusseren Umfangsfläche (26) verlaufenden Spannfläche (28a) des Werkstückträgers (22) ausgebildet sind, wobei die Spannelemente als Schieberelemente (10) ausgebildet sind und einen mit einer Druckfläche (13) versehenen Vorderteil (12) aufweisen, welcher sich beim Festspannen flächig an der Spannfläche (28a) des Werkstückträgers (22) anlegt, wobei die Schieberelemente (10) mittels Druckfedern (11) belastet sind, deren Längsachse parallel zur Schieberichtung der Schieberelemente (10) verläuft und wobei das jeweilige Schieberelement (10) unter der Wirkung der Druckfedern (11) in Richtung eines im Spannfutter (1) aufgenommenen Werkstückträgers (22) gedrückt wird und und wobei das Spannfutter ein fremdbetätigtes Betätigungselement aufweist, mittels welchem die Schieberelemente (10) entgegen der Kraft der Druckfedern (11) verschiebbar sind, **dadurch gekennzeichnet, dass** das Betätigungselement in Form eines ringförmigen Kolbens (16) ausgebildet ist, der einen mit einer schrägen Druckfläche versehenen Fortsatz (17) zum Verschieben der Schieberelemente (10) aufweist.

2. Spanneinrichtung nach Anspruch 1, **dadurch gekennzeichnet, dass** der Werkstückträger (22) eine zylindrische Mantelfläche (26) aufweist.

3. Spanneinrichtung nach einem der vorhergehenden Ansprüche, **dadurch gekennzeichnet, dass** der Werkstückträger (22) eine in die Mantelfläche (26) eingelassene Ringnut (27) aufweist, deren eine Seitenwand eine als Spannfläche (28a) dienende Schulter (28) bildet.

4. Spanneinrichtung nach einem der vorhergehenden Ansprüche, **dadurch gekennzeichnet, dass** die Schieberelemente (10) in Z-Richtung flächig an einem massiven Einsatz (3) des Spannfutters (1) abgestützt sind.

5. Spanneinrichtung nach Anspruch 4, **dadurch gekennzeichnet, dass** die Schieberelemente (10) in schlitzförmigen Ausnehmungen (9) des Einsatzes (3) aufgenommen sind.

6. Spanneinrichtung nach Anspruch 5, **dadurch gekennzeichnet, dass** die jeweilige Ausnehmung (9) zwischen 1 und 5 Mikrometer höher ist, als der darin aufzunehmende Teil eines Schieberelements (10).

7. Spanneinrichtung nach einem der Ansprüche 4 bis 6, **dadurch gekennzeichnet, dass** der Grundkörper (2) einen sich im Wesentlichen in radialer Richtung erstreckenden Basisteil (2a) aufweist und der Einsatz (3) mit einer umlaufenden Schulter (15) versehen ist, welche sich in Zugrichtung flächig an der Unterseite des Basisteils (2a) des Grundkörpers (2) abstützt.

8. Spanneinrichtung nach einem der vorhergehenden Ansprüche, **dadurch gekennzeichnet, dass** am Spannfutter (1) ersten Zentrierelemente (6) angeordnet sind, welche mit am Werkstückträger (22) angeordneten weiteren Zentrierelementen (24) derart zusammenwirken, dass der Werkstückträger (22) beim Festspannen gegenüber dem Spannfutter (1) in X- und Y-Richtung positioniert wird.

9. Spanneinrichtung nach einem der vorhergehenden Ansprüche, **dadurch gekennzeichnet, dass** das Spannfutter (1) zumindest zwei Schieberelemente (10) aufweist, deren Vorderteil zumindest je eine Druckfläche (13) zur flächigen Anlage an der Spannfläche (28a) des Werkstückträgers (22) aufweist, wobei sich die Druckflächen (13) der Schieberelemente (10) gesamthaft über zumindest die Hälfte des Umfangs des Werkstückträgers (22) erstrecken.

10. Spanneinrichtung nach einem der vorhergehenden Ansprüche, **dadurch gekennzeichnet, dass** der Werkstückträger (22), im Querschnitt gesehen, rund oder rechteckig ausgebildet ist und in die Mantelfläche (26) des Werkstückträgers (22) eine umlaufende Nut (27) eingelassen ist, deren eine Seitenwand eine ringförmig umlaufende Schulter (28) bildet, welche als Spannfläche (28a) für die Schieberelemente (10) ausgebildet ist.

11. Spanneinrichtung nach einem der vorhergehenden Ansprüche, **dadurch gekennzeichnet, dass** das Spannfutter (1) zumindest vier Schieberelemente (10) aufweist, welche mittels Federn (11) derart belastet sind, dass ein im Spannfutter (1) aufgenommener Werkstückträger (22) fixierbar ist.

12. Spanneinrichtung nach einem der vorhergehenden Ansprüche, **dadurch gekennzeichnet, dass** die Spannfläche (28a) des Werkstückträgers (22) in radialer Richtung von aussen nach innen ansteigt und der Vorderteil (12) der Schieberelemente (10) derart an die Kontur der Spannfläche (28a) des Werkstückträgers (22) angepasst ist, dass die Schieberelemente (10) grossflächig an der Spannfläche (28a) des Werkstückträgers (22) zur Anlage kommen.

13. Spanneinrichtung nach einem der vorhergehenden Ansprüche, **dadurch gekennzeichnet, dass** der Werkstückträger (22a) auf seiner Oberseite mit einem umlaufenden Kragen (33) versehen ist, der die Mantelfläche des Werkstückträgers (22a) in radialer Richtung überrragt, und dass auf der Oberseite des Spannfutters (1a) eine Dichtung (34) angeordnet ist, welche beim Festspannen des Werkstückträgers (22a) an der Unterseite des Kragens (33) zur Anlage kommt.

## Claims

1. A clamping device having a clamping chuck (1) and a workpiece carrier (22) which can be fixed thereto in a detachable manner, the clamping chuck (1) being provided with a clamping mechanism for fixing the workpiece carrier (22) and the clamping mechanism having a multiplicity of clamping elements, which are constructed for bearing against a clamping surface (28a) of the workpiece carrier (22) running along the outer circumferential surface (26), the clamping elements being constructed as slide elements (10) and having a front part (12) provided with a pressure surface (13), which front part bears flat against the clamping surface (28a) of the workpiece carrier (22) during clamping, the slide elements (10) being loaded by means of compression springs (11), the longitudinal axis of which runs parallel to the sliding direction of the slide elements (10) and the respective slide element (10) being pressed in the direction of a workpiece carrier (22) accommodated in the clamping chuck (1) under the action of the compression springs (11), and the clamping chuck having an externally actuated actuating element, by means of which the slide elements (10) can be displaced counter to the force of the compression springs (11), **characterized in that** the actuating element is constructed in the form of an annular piston (16), which has an extension (17) provided with an oblique pressure surface for the displacement of the slide elements (10).

2. The clamping device according to Claim 1, **characterized in that** the workpiece carrier (22) has a cylindrical mantle surface (26).

3. The clamping device according to one of the preceding claims, **characterized in that** the workpiece carrier (22) has an annular groove (27) embedded into the mantle surface (26), one sidewall of which forms a shoulder (28) which is used as a clamping surface (28a).

4. The clamping device according to one of the preceding claims, **characterized in that** the slide elements (10) are supported flat in the Z direction against a solid insert (3) of the clamping chuck (1).

5. The clamping device according to Claim 4, **characterized in that** the slide elements (10) are accommodated in slot-shaped recesses (9) of the insert (3).

6. The clamping device according to Claim 5, **characterized in that** the respective recess (9) is between 1 and 5 micrometres higher than the part of a slide element (10) to be accommodated therein.

7. The clamping device according to one of Claims 4 to 6, **characterized in that** the base body (2) has a base part (2a) extending substantially in the radial direction and the insert (3) is provided with a circumferential shoulder (15), which is supported flat in the pulling direction against the underside of the base part (2a) of the base body (2).

8. The clamping device according to one of the preceding claims, **characterized in that** first centring elements (6) are arranged on the clamping chuck (1), which interact with further centring elements (24) arranged on the workpiece carrier (22) in such a manner that the workpiece carrier (22) is positioned in the X and Y direction with respect to the clamping chuck (1) during clamping.

9. The clamping device according to one of the preceding claims, **characterized in that** the clamping chuck (1) has at least two slide elements (10), the front part of which has at least one pressure surface (13) in each case for flat bearing against the clamping surface (28a) of the workpiece carrier (22), wherein the pressure surfaces (13) of the slide elements (10) as a whole extend over at least half of the circumference of the workpiece carrier (22).

10. The clamping device according to one of the preceding claims, **characterized in that** the workpiece carrier (22), as viewed in cross section, is of round or rectangular construction and a circumferential groove (27) is embedded into the mantle surface (26) of the workpiece carrier (22), one sidewall of which forms an annularly circumferential shoulder (28), which is constructed as a clamping surface (28a) for the slide elements (10).

11. The clamping device according to one of the preceding claims, **characterized in that** the clamping chuck (1) has at least four slide elements (10), which are loaded by means of springs (11) in such a manner that a workpiece carrier (22) accommodated in the clamping chuck (1) can be fixed.

12. The clamping device according to one of the preceding claims, **characterized in that** the clamping surface (28a) of the workpiece carrier (22) increases in the radial direction from the outside inwards and the front part (12) of the slide elements (10) is adapted to the contour of the clamping surface (28a) of the workpiece carrier (22) in such a manner that the slide elements (10) come to bear over a large area against the clamping surface (28a) of the workpiece carrier (22).

13. The clamping device according to one of the preceding claims, **characterized in that** the workpiece carrier (22a) is provided on its upper side with a circumferential collar (33), which protrudes beyond the mantle surface of the workpiece carrier (22a) in the radial direction, and **in that** a seal (34) is arranged on the upper side of the clamping chuck (1a), which seal comes to bear against the underside of the collar (33) during the clamping of the workpiece carrier (22a) .

## Revendications

1. Dispositif de serrage avec un mandrin (1) et un porte-pièce (22) pouvant être fixé au niveau de ce dernier de manière amovible, dans lequel le mandrin (1) est pourvu d'un mécanisme de serrage servant à fixer le porte-pièce (22) et le mécanisme de serrage présente une pluralité d'éléments de serrage, lesquels sont réalisés pour venir se placer au niveau d'une surface de serrage (28a), s'étendant le long de la surface périphérique (26) extérieure, du porte-pièce (22), dans lequel les éléments de serrage sont réalisés sous la forme d'éléments coulissants (10) et présentent une partie avant (12) pourvue d'une surface de pression (13), laquelle se place à plat au niveau de la surface de serrage (28a) du porte-pièce (22) lors du blocage, dans lequel les éléments coulissants (10) sont soumis à une contrainte au moyen de ressorts de pression (11), dont l'axe longitudinal s'étend de manière parallèle par rapport à la direction de coulissement des éléments coulissants (10) et dans lequel l'élément coulissant (10) respectif est poussé sous l'action des ressorts de pression (11) en direction d'un porte-pièce (22) logé dans le mandrin (1) et dans lequel le mandrin présente un élément d'actionnement actionné de manière externe, au moyen duquel les éléments coulissants (10) peuvent être coulissés à l'encontre de la force des ressorts de pression (11), **caractérisé en ce que** l'élément d'actionnement est réalisé sous la forme d'un piston (16) de forme annulaire, qui présente un prolongement (17) pourvu d'une surface de pression oblique servant à faire coulisser les éléments coulissants (10).

2. Dispositif de serrage selon la revendication 1, **caractérisé en ce que** le porte-pièce (22) présente une surface extérieure (26) cylindrique.

3. Dispositif de serrage selon l'une quelconque des revendications précédentes, **caractérisé en ce que** le porte-pièce (22) présente une rainure annulaire (27) pratiquée dans la surface extérieure (26), dont une paroi latérale forme un épaulement (28) faisant office de surface de serrage (28a).

4. Dispositif de serrage selon l'une quelconque des revendications précédentes, **caractérisé en ce que** les éléments coulissants (10) prennent appui dans la direction Z à plat au niveau d'une garniture (3) massive du mandrin (1).

5. Dispositif de serrage selon la revendication 4, **caractérisé en ce que** les éléments coulissants (10) sont logés dans des évidements (9) en forme d'entaille de la garniture (3).

6. Dispositif de serrage selon la revendication 5, **caractérisé en ce que** l'évidement (9) respectif compris entre 1 et 5 micromètres est supérieur à la partie, à loger dans ce dernier, d'un élément coulissant (10).

7. Dispositif de serrage selon l'une quelconque des revendications 4 à 6, **caractérisé en ce que** le corps de base (2) présente une partie de base (2a) s'étendant sensiblement dans une direction radiale, et la garniture (3) est pourvue d'un épaulement (15) périphérique, lequel prend appui dans la direction de traction à plat au niveau du côté inférieur de la partie de base (2a) du corps de base (2).

8. Dispositif de serrage selon l'une quelconque des revendications précédentes, **caractérisé en ce que** sont disposés au niveau du mandrin (1) des premiers éléments de centrage (6), lesquels coopèrent avec d'autres éléments de centrage (24) disposés au niveau du porte-pièce (22) de telle manière que le porte-pièce (22) est positionné dans une direction X et dans une direction Y par rapport au mandrin (1) lors du blocage.

9. Dispositif de serrage selon l'une quelconque des revendications précédentes, **caractérisé en ce que** le mandrin (1) présente au moins deux éléments coulissants (10), dont la partie avant présente au moins respectivement une surface de pression (13) destinée à venir se placer à plat au niveau de la surface de serrage (28a) du porte-pièce (22), dans lequel les surfaces de pression (13) des éléments coulissants (10) s'étendent globalement sur au moins la moitié de la périphérie du porte-pièce (22).

10. Dispositif de serrage selon l'une quelconque des revendications précédentes, **caractérisé en ce que** le porte-pièce (22), vu en coupe, est réalisé de manière ronde ou rectangulaire et une rainure (27) périphérique est pratiquée dans la surface extérieure (26) du porte-pièce (22), dont une paroi latérale forme un épaulement (28) périphérique de forme annulaire, lequel est réalisé sous la forme d'une surface de serrage (28a) pour les éléments coulissants (10).

11. Dispositif de serrage selon l'une quelconque des revendications précédentes, **caractérisé en ce que** le mandrin (1) présente au moins quatre éléments coulissants (10), qui sont soumis à une contrainte au moyen de ressorts (11) de telle manière qu'un porte-pièce (22) logé dans le mandrin (1) peut être fixé.

12. Dispositif de serrage selon l'une quelconque des revendications précédentes, **caractérisé en ce que** la surface de serrage (28a) du porte-pièce (22) augmente dans une direction radiale de l'extérieur vers l'intérieur et la partie avant (12) des éléments coulissants (10) est adaptée de telle manière au contour de la surface de serrage (28a) du porte-pièce (22) que les éléments coulissants (10) viennent se placer sur une grande surface au niveau de la surface de serrage (28a) du porte-pièce (22).

13. Dispositif de serrage selon l'une quelconque des revendications précédentes, **caractérisé en ce que** le porte-pièce (22a) est pourvu sur son côté supérieur d'un rebord (33) périphérique, qui dépasse dans une direction radiale de la surface extérieure du porte-pièce (22a), et qu'est disposé, sur le côté supérieur du mandrin (1a), un joint d'étanchéité (34) qui vient se placer au niveau du côté inférieur du rebord (33) lors du blocage du porte-pièce (22a).
